# EUROPEAN PATENT APPLICATION

(11) **EP 4 538 321 A1**
(43) Date of publication of application: **16.04.2025**
(21) Application number: 23202948.8
(22) Date of filing: 11.10.2023
(51) Int. Cl.: C08K 3/26

(54) **A WAY TO INCREASE THE NUCLEATION EFFICIENCY OF SSC MATERIALS**

(71) Applicant: Borealis AG, 1020 Vienna (AT)
(72) Inventor: WANG, Jingbo, 4021 Linz (AT); GAHLEITNER, Markus, 4021 Linz (AT); BERNREITNER, Klaus, 4021 Linz (AT); HARTL, Anna Maria, 4021 Linz (AT); LESKINEN, Pauli, 06850 Kulloo (FI)
(74) Representative: TBK

(57) **Abstract**

The invention relates to a polypropylene composition comprising a single site catalyzed polypropylene homopolymer (SScPPH) having a melt flow rate MFR2 in the range of from 1 to 500 g/10 min (according ISO 1133 at 230 °C and 2.16 kg load), a melting temperature Tm in the range of from 149 to 160 °C (DSC according to ISO 11357) and an amount of 2,1-erythro regio-defects in the range of from 0.10 to 1.20 mol-% (determined by ¹³C NMR spectroscopy), 0.01 to 1.00 wt.-% of a first dispersive particulate α-nucleating agent, 0.01 to 1.00 wt.-% of a second dispersive particulate α-nucleating agent, and 0 to 500 ppm by weigh of a third dispersive particulate α-nucleating agent being a polymeric nucleating agent.

## Description

### Field of the invention

The present invention relates to a way to increase the nucleation efficiency of singe site catalyzed (SSc) polypropylene materials, in particular to a composition having improved nucleation efficiency and comprising a SSc propylene homopolymer (SScPPH). The invention furthermore relates to uses of this composition.

### Technical background

Polypropylene is a thermoplastic material which is widely used due to desirable processing property, chemical resistance, electrical properties and mechanical properties. Thermoplastic refers to a plastic which can be softened to flow upon exposure to sufficient heat but will retain its solidified state upon cooling. Polypropylene can be used to manufacturing various kinds of injection-molded items, for example, daily necessities, kitchen equipment, toys, medical devices, electrical appliances, and extruded articles like pipes for use in vehicles, construction and infrastructure.

During solidification and crystallization of a polymer melt, a long relaxation time is needed for long-chains of macromolecules to change from a disorder state to an ordered crystalline state. Crystallization rate and crystallization temperature is generally low, which may lead to formation of big-size spherulitic crystals and obvious interfaces between these spherulites. The obvious interfaces between different big-size spherulites may induce different internal stress. Upon impact, cracks may form at the interfaces, which may further lead to fracture and failure of the solidified polymer. When a nucleating agent is added into the polypropylene melt, the nucleating agent provides adequate crystal nuclei. Therefore, during cooling, the polypropylene melt can form much more small-size, orderly arranged, compactly and evenly dispersed spherulites or smaller units. Accordingly, the internal stress generated is small and disperse, which can improve mechanical properties and thermal properties of polypropylene and further promote the successful application of polypropylene.

To modify a conventional polypropylene as a functional material having desirable physical properties, for example, high rigidity, desirable impact resistance and thermal stability, modification by nucleation is one of the most simple and effective methods. Adding nucleating agent(s) in polypropylene can induce polypropylene to form orderly arranged and welldispersed small spherocrystals, which may improve the physical properties of polypropylene.

US 9,085,683 B2, for example, discloses a nucleating agent composition for enhancing rigidity and toughness of polypropylene. WO 2014/202603 A1 discloses a further nucleating composition.

### Summary of the invention

It has surprisingly been found that the interaction of a specific single site catalyzed polypropylene homopolymer having a melt flow rate MFR2 in the range of from 1 to 500 g/10 min, a melting temperature Tm in the range of from 149 to 160 °C and an amount of 2,1-erythro regio-defects in the range of from 0.10 to 1.20 mol-%, with a combination of at least two dispersive particulate α-nucleating agents results in superior nucleation efficiency.

The present invention relates to a polypropylene composition comprising a single site catalyzed polypropylene homopolymer (SScPPH), 0.01 to 1.00 wt.-% of a first dispersive particulate α-nucleating agent, 0.01 to 2.00 wt.% of a second dispersive particulate α-nucleating agent, and 0 to 500 ppm by weight of a third dispersive particulate α-nucleating agent being a polymeric nucleating agent, the respective contents being given relative to the total composition. The single site catalyzed polypropylene homopolymer (SScPPH) has a melt flow rate MFR2 in the range of from 1 to 500 g/10 min (according ISO 1133 at 230 °C and 2.16 kg load), a melting temperature Tm in the range of from 149 to 160 °C (DSC according to ISO 11357) and an amount of 2,1-erythro regio-defects (in the following sometimes abbreviated as "*regio-defects*") in the range of from 0.10 to 1.20 mol-% (determined by ¹³C NMR spectroscopy).

In particular, single site catalyzed polypropylene homopolymers are an interesting family of materials having a broad potential application range. However, the inevitable presence of regio-defects in the polymer chains of such SScPPH materials disturbs crystallization and conventional nucleation modification might not be sufficient to achieve good nucleation performance of the challenging SScPPH of the present invention. In addition, single site catalyzed polypropylenes are characterized by a narrow molecular weight distribution, reducing the inherent level of self-nucleation. The inventors, however, surprisingly found that the combination of nucleation agents of the present invention can provide a significant improvement in nucleation efficiency and thus completed the present invention.

The first, second and third nucleating agents are each different from each other. The first second and third agent may each be a mixture (of individual compounds). As indicated above, the content of the third α-nucleating agent may be 0 (i.e. the third α-nucleating agent may be absent).

The inventors surprisingly found that the synergistic interaction of two or three different dispersive particulate α-nucleating agents, being different in type, with a specific impact SSc polypropylene homopolymer as defined above results in superior properties, in particular in favorable balance between processability, mechanical properties and impact properties.

Further, the present invention relates to molded product comprising the composition of the present invention and to a use of the composition of the invention for preparing a molded product.

As apparent from the word *"polypropylene composition*", the present invention does not aim at a composition of different polymers. Accordingly, the polypropylene composition comprises additive(s) and optionally other component(s) (C), but preferably no other polymer components than the SScPPH, except for the optional polymeric nucleating agent(s) and/or matrix polymers of a masterbatch for adding additive(s) and/or nucleating agent(s) in an amount not exceeding 4.00 wt.-%, preferably in an amount of 3.00 wt.-% or less.

### Definitions

In the following amounts are given in % by weight (wt.-%) unless it is stated otherwise.

The term "comprising" (as well as terms "containing", "including" or "having") as used in the present invention does not exclude other components. For the purposes of the present invention, the term consisting of" is considered to be a preferred embodiment of the term "comprising" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Unless explicitly described otherwise, the description of the present invention is to be understood so that one or more of any of the described preferred embodiments of the invention can be combined with the invention described in its most general features and/or with features (or sub-features) if other embodiments.

Further, where an indefinite or definite article is used when referring to a singular noun, e.g. "a", "an" or "the", this includes a plural of that noun unless something else is specifically stated.

### Detailed description of the invention

### Polypropylene composition

The polypropylene composition of the present invention comprises the single site catalyzed polypropylene homopolymer (SScPPH), 0.01 to 1.00 wt.-% of a first dispersive particulate α-nucleating agent, 0.01 to 2.00 wt.% of a second dispersive particulate α-nucleating agent, and 0 to 500 ppm by weight of a third dispersive particulate α-nucleating agent. The third dispersive particulate α-nucleating agent is a polymeric nucleating agent.

This combination of PP homopolymer and nucleating agents has surprisingly been found to result in significantly improved nucleation efficiency, among others resulting in higher crystallization temperature, higher HDT (heat distortion temperature) and higher flexural modulus, and in particular in an improved overall performance (and balance) of these three properties, i.e. simultaneous improvement of mechanical properties and workability.

The composition of the present invention preferably has a melt flow rate MFR2 (measured at 230 °C, 2.16 kg, ISO 1133) in the range of from 1 to 500 g/10 min, more preferably in the range of from 10 to 500 g/10 min, even more preferably in the range of from 50 to 450 g/10 min, like in the range of from 70 to 300 g/10 min.

The composition preferably has a crystallization temperature Tc (determined based on differential scanning calorimetry, DSC, according to ISO 11357) in the range of from 120 to 135 °C, more preferably in the range of from 123 to 133 °C.

The composition preferably has melting enthalpy (Hm) in the range of from 95 to 125 J/g, more preferably in the range of from 100 to 120 J/g, like in the range of from 105 to 115 J/g, determined by DSC according to ISO 3146.

The composition preferably has a Flexural modulus (according to ISO 178) in the range of 1800 to 2500 MPa, more preferably in the range of from 1820 to 2300 MPa, even more preferably in the range of from 1830 to 2200 MPa.

The composition preferably has a heat distortion temperature (HDT; according to ISO 75 B, low load, measured on 80x10x4 mm³ specimens) in the range of 105 to 130 °C, more preferably in the range of from 108 to 128 °C, like in the range of from 109 to 126 °C.

### Nucleating agents

The nucleating agents (forming a nucleation system) of the present invention will be described below. The present invention is based on the favorable interactions of at least two specific dispersive particulate α-nucleating agents with a specific SScPPH as defined in the present invention. Although the specific interaction achieved by this combination is not fully understood, it was found that this combination provides remarkable improvements.

In the context of the present invention, the term *"particulate nucleating agent"* means that the respective nucleating agent neither melts nor dissolves in the polypropylene homopolymer in the temperature range used for processing, like in the temperature range between the melting point and 300 °C. The term "*dispersive*" means that the nucleating agent is/will be present in a dispersed state in the polypropylene homopolymer. For details, e.g. regarding the distinction between different types of nucleating agents, which are herein referred to as low molecular weight organic (type), polymeric (type) and inorganic (type) nucleating agents, reference is made to M. Gahleitner, C. Grein, S. Kheirandish & J. Wolfschwenger, "Nucleation of Polypropylene Homo- and Copolymers", Intern.Polym.Proc. 26 (2011) 2-20).

The composition of the present invention comprises the first nucleating agent, the second nucleating agent and optionally the third nucleating agent. Preferably, no further nucleating agent(s) is (are) present.

### First nucleating agent

The polypropylene composition of the present invention comprises 0.01 to 1.00 wt.-% of the first dispersive particulate α-nucleating agent (briefly: *"first nucleating agent*"). The polypropylene composition preferably comprises 0.02 to 0.80 wt.-%, more preferably 0.03 to 0.60 wt.-%, of the first dispersive particulate α-nucleating agent. As said above, the first dispersive particulate α-nucleating agent may be a mixture of dispersive particulate α-nucleating agents of the same type.

The first dispersive particulate α-nucleating agent or the components of the mixture forming the first dispersive particulate α-nucleating agent are preferably selected from low molecular weight organic type nucleating agent(s). Low molecular weight organic type nucleating agents are also referred to as non-polymeric organic type nucleating agents. This means that the organic part (e.g. an organic anion in the case of a metal salt) does not have a polymer chain, in particular that a (single) polymer part has a molecular weight of not more than 800 g/mol, preferably not more than 600 g/mol, more preferably not more than 500 g/mol, like not more than 400 g/mol.

In particular, the first dispersive particulate α-nucleating agent or the components of the mixture forming the first dispersive particulate α-nucleating agent are preferably selected from the group consisting of
(i) salts of monocarboxylic acids, like sodium benzoate or aluminum bis(4-tert-butylbenzoate) hydroxide,
(ii) salts of di- or polycarboxylic acids, like the disodium salt of bicyclo (2.2.1) heptane-2,3-dicarboxylic acid or the calcium salt of 1,2-cyclohexane dicarboxylicacid, and
(iii) salts of diesters of phosphoric acid, like sodium 2,2'-methylenebis (4,6,-di-tert-butylphenyl) phosphate or aluminium-hydroxy-bis[2,2'-methylene-bis(4,6-di-t-butylphenyl)phosphate];

Specific examples of a first nucleating agent comprise at least one of sodium benzoate, sodium-2,2'-methylenebis-(4,6-di-tert-butyl-phenyl)-phosphate, aluminum bis(4-tert-butylbenzoate) hydroxide, hydroxybis-(2,4,8,10-tetra-tert-butyl-6-hydroxy-12h-dibenzo-(d,g)(1,3,2)-dioxaphosphocin-oxidato)-aluminium.

Preferably, the first dispersive particulate α-nucleating agent or the components of the mixture forming the first dispersive particulate α-nucleating agent are selected from the group consisting of aromatic carboxylic acid salts, more preferably salts of substituted or unsubstituted benzoic acid, even more preferably salts of benzoic acid having an alkyl substituent in para position.

### Second nucleating agent

The polypropylene composition of the present invention comprises 0.01 to 2.00 wt.-% of the second dispersive particulate α-nucleating agent (briefly: *"second nucleating agent*"). The polypropylene composition preferably comprises 0.02 to 1.80 wt.-% of the second dispersive particulate α-nucleating agent. As said above, the second dispersive particulate α-nucleating agent may be a mixture of dispersive particulate α-nucleating agents of the same type.

Preferably, the second dispersive particulate α-nucleating agent or the components of the mixture forming the second dispersive particulate α-nucleating agent are selected from inorganic type nucleating agents (mineral nucleating agents), more preferably at least one selected from the group consisting of carbonates, silicates, aluminates or alumosilicates.

Preferably, the second dispersive particulate α-nucleating agent or the components of the mixture forming the second dispersive particulate α-nucleating agent are selected from the group consisting of inorganic compounds, including calcium carbonate, talc, wollastonite, mica and kaolin. The second dispersive particulate α-nucleating agent or the components of the mixture forming the second dispersive particulate α-nucleating agent preferably comprise at least talc. The second dispersive particulate α-nucleating agent preferably is talc.

The inorganic (mineral) nucleating agent has a median particle size D50 (according to ISO 13317-3, Sedigraph method) of less than 10 µm, preferably in the range of from 0.5 to 10.0 µm, like in the range of from 1.0 to 9.5 µm, in the range of from 1.5 to 9.0 µm, in the range of from 2.0 to 8.5 µm, or in the range of from 2.2 to 8.0 µm.

### Third nucleating agent

The polypropylene composition of the present invention comprises 0 to 500 ppm by weight of the third dispersive particulate α-nucleating agent (briefly: *"third nucleating agent*"). The polypropylene composition preferably comprises 0 to 300 ppm, like 0 to 150 ppm, of the third α-nucleating agent. Further, the content of the third nucleating agent may be 0, i.e. the third nucleating agent may be absent.

The third dispersive particulate α-nucleating agent is selected from polymeric α-nucleating agents, like poly(vinyl cyclohexane) and poly(vinyl cyclopentane), i.e. the third nucleating agent is a polymeric type nucleating agent.

### SSc Polypropylene homopolymer (SScPPH)

The polypropylene composition comprises the single site catalyzed polypropylene homopolymer (SScPPH) having a melt flow rate MFR2 in the range of from 1 to 500 g/10 min (according ISO 1133 at 230 °C and 2.16 kg load), a melting temperature Tm in the range of from 149 to 160 °C (determined based on differential scanning calorimetry, DSC, according to ISO 11357) and an amount of 2,1-erythro regio-defects in the range of from 0.10 to 1.20 mol-% (determined by ¹³C NMR spectroscopy).

The polypropylene composition preferably contains 90.00 wt.-% or more of the SScPPH, preferably 91.00 wt.-% or more, like 92.00 wt.-% or more, 93.00 wt.-% or more, 94.00 wt.-% or more, 95.00 wt.-% or more, 95.50 wt.-% or more, or 96.00 wt.-% or more.

The polypropylene composition according to the present invention preferably contains the SScPPH in an amount in the range of from 90.00 to 99.98 wt.-%, preferably in the range of from 92.00 to 99.90 wt.-%, like in the range of from 93.00 to 99.50 wt.-%, in the range of from 94.00 to 99.00 wt.-%, in the range of from 95.00 to 98.50 wt.-%, or in the range of from 96.00 to 98.00 wt.-%.

Preferably, the polypropylene composition in accordance with the present invention comprises (A) the SScPPH, (B) the (first, second and, as the case may be, third) nucleating agents and (C) optional additive(s) (indicated below). Preferably, the components (A) and (B) and, if present, the component(s) (C) add up to 100 wt.-% (the composition preferably consists of components (A), (B) and, if present, (C)).

In the present invention, the SScPPH is a polypropylene homopolymer in which preferably only propylene units are detectable (e.g. determined with ¹³C NMR spectroscopy). However, a skilled person and the present invention appreciates modifications e.g. the homopolymer may contain trace amounts of contaminate comonomers, e.g. alpha-olefin comonomers and the term homopolymer, as used herein, refers to a polypropylene polymer containing at least 99.0 wt.-%, preferably at least 99.8 wt.-%, more preferably of at least 99.9 wt.-%, most preferably 100 wt.-% of propylene units (e.g. determined with ¹³C NMR spectroscopy), as long as the claimed requirements of the individual constituents as well as that of the PPH composition are satisfied.

Preferably, the SScPPH has a melt flow rate MFR2 in the range of from 10 to 500 g/10 min, more preferably in the range of 50 to 450 g/10 min, like in the range of from 70 to 300 g/10 min.

Preferably, the SScPPH has a melting temperature Tm in the range of from 150 to 158 °C, more preferably in the range of from 151 to 157 °C.

The SScPPH preferably has an amount of 2,1-erythro regio-defects in the range of from 0.15 to 1.10 mol-%, more preferably in the range of from 0.20 to 1.00 mol-%, like in the range of from 0.25 to 0.90 mol-%.

Preferably, the SScPPH has a xylene cold soluble content (XCS at 25 °C according to ISO 16152) in the range of from 0.10 wt.-% to 1.50 wt.-%, preferably in the range of from 0.15 to 1.20 wt.-%, more preferably in the range of from 0.20 to 1.10 wt.-%, like in the range of from 0.25 to 1.00 wt.-%.

The SScPPH is preferably a bimodal SScPPH and/or a multimodal SScPPH. The bimodal/multimodal SScPPH preferably comprises or consists of a first PPH component (PPH-C1) and a second PPH component (PPH-C2).

The bimodal SScPPH is preferably made in a two-stage polymerization process applying a slurry - gas phase reactor (GPR) cascade, such that the PPH-C1 is made in the slurry reactor and the PPH-C2 is made in the GPR.

According to one embodiment, the multimodal SScPPH is made in a multistage polymerization process applying a cascade of at least two slurry reactors and at least one gas phase reactor (GPR). According to another embodiment, the multimodal SScPPH is made in a multi-stage polymerization process applying a cascade of at least one slurry reactor and at least two gas phase reactors (GPR).

A preferred multistage process for producing the PP homopolymer is a *"loop-gas phase"-process,* such as developed by Borealis A/S, Denmark (known as BORSTAR^{®} technology) described e.g. in patent literature, such as in EP 0 887 379 , WO 92/12182, WO 2004/000899, WO 2004/111095, WO 99/24478, WO 99/24479 or in WO 00/68315. A further suitable slurrygas phase process is the Spheripol^{®} process of Basell.

The PP homopolymer is preferably produced by a process comprising the steps of:
a) Polymerizing propylene in the presence of a metallocene type catalyst system in a first polymerization reactor for producing a first propylene polymer fraction;
b) Transferring a polymerization mixture comprising the metallocene type catalyst system and the first propylene polymer fraction from the first polymerization reactor to a second polymerization reactor;
c) Polymerizing propylene in the presence of the metallocene type catalyst system in the second polymerization reactor for producing a second propylene polymer fraction;
d) Transferring a polymerization mixture comprising the metallocene type catalyst system and the first and second propylene polymer fractions from the second polymerization reactor to a third polymerization reactor;
e) Polymerizing propylene and ethylene in the presence of the metallocene type catalyst system in the third polymerization reactor for producing a third polymer fraction;
f) Withdrawing a polymerization mixture comprising the metallocene type catalyst system, the first, second and third polymer fractions from the third polymerization reactor; and
g) Obtaining a polymer composition comprising the polymer fractions,
said process being optionally preceded by a pre-polymerization step.

The first polymerization reactor preferably is a slurry phase reactor, like a loop reactor, most suitably a liquid bulk loop reactor. The second polymerization reactor may be a liquid bulk loop reactor or a gas phase reactor, preferably a gas phase reactor. The second polymerization reactor preferably is a (first) gas phase reactor, like a first fluidized bed gas phase reactor. The third polymerization reactor preferably is a (second) gas phase reactor, like a second fluidized bed gas phase reactor.

In the pre-polymerization reactor, a polypropylene is preferably produced. The pre-polymerization is preferably conducted in the presence of the metallocene type catalyst. According to this embodiment, the metallocene type catalyst is introduced to the pre-polymerization step. However, this shall not exclude the option that at a later stage for instance further co-catalyst is added in the polymerization process, for instance in the first reactor. In one embodiment, all components of the metallocene type catalyst are only added in the pre-polymerization reactor, if a pre-polymerization is applied. The pre-polymerization reaction is typically conducted at a temperature of 0 to 60 °C, preferably from 15 to 50 °C, and more preferably from 20 to 45 °C.

The polypropylene homopolymer is prepared in the presence of a single site catalyst system. Such a single site catalyst system generally comprises a transition metal compound.

The transition metal compound preferably has the formula (I)

Rₙ(Cp)₂MX₂ (I)

wherein each Cp independently is an unsubstituted or substituted and/or fused cyclopentadienyl ligand, e.g. substituted or unsubstituted cyclopentadienyl, substituted or unsubstituted indenyl, a substituted or unsubstituted indacenyl (such as substituted or unsubstituted 1,3,4,5-tetrahydro-s-indacen(1)yl) or substituted or unsubstituted fluorenyl ligand; the optional one or more substituent(s) being independently selected
preferably from halogen, hydrocarbyl (e.g. C1-C20-alkyl, C2-C20-alkenyl, C2- C20-alkynyl, C3-C12-cycloalkyl, C6-C20-aryl or C7-C20-arylalkyl), C3-C12- cycloalkyl which contains 1, 2, 3 or 4 heteroatom(s) in the ring moiety, C6-C20- heteroaryl, C1-C20-haloalkyl, -SiR"3, -OSiR"3, -SR",-PR"₂, OR" or -NR"₂,
each R" is independently a hydrogen or hydrocarbyl, e.g. C1-C20-alkyl, C2-C20-alkenyl, C2-C20-alkynyl, C3 -C12-cycloalkyl or C6-C20-aryl; or e.g. in case of - NR"₂, the two substituents R" can form a ring, e.g. five- or six-membered ring, together with the nitrogen atom to which they are attached;
R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. -SiR¹⁰₂, wherein each R¹⁰ is independently C1-C20-alkyl, C3-12 cycloalkyl, C6-C20-aryl or tri(C1-C20-alkyl)silyl- residue, such as trimethylsilyl;
M is a transition metal of Group 4, e.g. Zr or Hf, especially Zr;
each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"3, -SiR"3, -OSiR"3, -NR"₂ or -CH₂-Y, wherein Y is C6-C20-aryl, C6-C20-heteroaryl, C1-C20-alkoxy, C6-C20-aryloxy, NR"₂,-SR", -PR"3, -SiR"3, or -OSiR"3;
each of the above mentioned ring moieties alone or as a part of another moiety as the substituent for Cp, X, R" or R can further be substituted e.g. with C1-C20-alkyl which may contain Si and/or O atoms;
n is 1 or 2.

Suitably, in each X as -CH₂-Y, each Y is independently selected from C6-C20-aryl, NR"₂, -SiR"3 or-OSiR'S. Most preferably, X as -CH₂-Y is benzyl. Each X other than -CH₂-Y is independently halogen, C1-C20-alkyl, C1-C20-alkoxy, C6- C20-aryl, C7-C20-arylalkenyl or -NR"₂ as defined above, e.g. -N(C1-C20-alkyl)₂.

Preferably, each X is halogen, methyl, phenyl or -CH₂-Y, and each Y is independently as defined above.

Cp is preferably cyclopentadienyl, indenyl or fluorenyl, optionally substituted as defined above. Ideally Cp is cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6- C20-aryl, C7-C20-arylalkyl (wherein the aryl ring alone or as a part of a further moiety may further be substituted as indicated above), -OSiR"3, wherein R" is as indicated above, preferably C1-C20-alkyl.

R, is preferably a methylene, ethylene or a silyl bridge, whereby the silyl can be substituted as defined above, e.g. a (dimethyl)Si=, (methylphenyl)Si=, (methylcylcohexyl)silyl= or (trimethylsilylmethyl)Si=; n is 0 or 1. Preferably, R" is other than hydrogen.

A specific subgroup includes the well-known metallocenes of Zr and Hf with two eta5-ligands which are bridged with cyclopentadienyl ligands optionallysubstituted with e.g. siloxy, or alkyl (e.g. C1-6-alkyl) as defined above, or with two bridged indenyl ligands optionally substituted in any of the ring moieties with e.g. siloxy or alkyl as defined above, e.g. at 2-, 3-, 4- and/or 7-positions. Preferred bridges are ethylene or -SiMe₂.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"₂ ligand see e.g. WO-A-985683 1 and WO-A-0034341. For the preparation see also e.g. in EP-A-260 130. WO-A-9728170, WO-A-9846616, WO-A-9849208, WO-A-9912981, WO-A-9919335, WO-A-9856831, WO-A-00 34341, EP-A-423 101 and EP-A-537 130.

The complexes employed in the present invention are preferably asymmetrical. That means simply that the two (preferably indenyl) ligands forming the metallocene are different, that is, each (preferably indenyl) ligand bears a set of substituents that are either chemically different, or located in different positions with respect to the other (preferably indenyl) ligand. More precisely, they are chiral, racemic bridged bisindenyl metallocenes. Whilst the complexes preferably employed in the invention may be in their syn configuration ideally, they are in their anti configuration. For the purpose of this invention, racemic-anti means that the two (preferably indenyl) ligands are oriented in opposite directions with respect to the cyclopentadienyl-metal-cyclopentadienyl plane, while racemic-syn means that the two (preferably indenyl) ligands are oriented in the same direction with respect to the cyclopentadienyl-metal-cyclopentadienyl plane.

Preferred complexes of the invention are of formula (IV') or (IV): 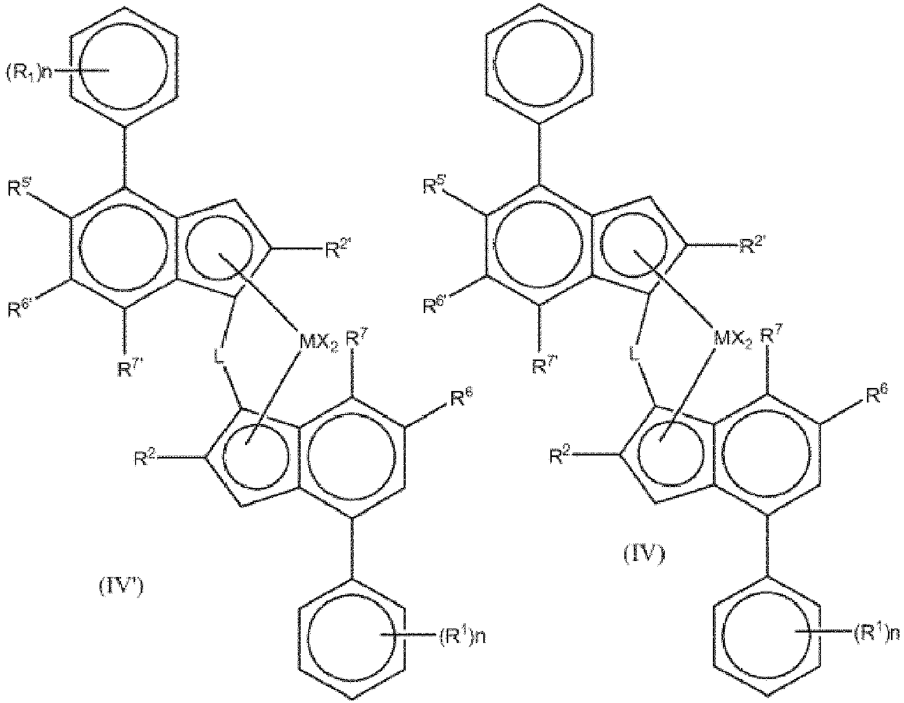 wherein
M is Zr;
each X is a sigma ligand, preferably each X is independently a hydrogen atom, a halogen atom, a C1-C6 alkoxy group, C1-C6 alkyl, phenyl or a benzyl group;
L is a divalent bridge selected from -R'₂C-, -R'₂C-CR'₂, -R'₂Si-, -R'zSi-SiR'z-, -R'₂Ge-, wherein each R' is independently a hydrogen atom, C1-C20 alkyl, C3-C10 cycloalkyl, tri(C1-C20-alkyl)silyl, C6-C20-aryl, C7-C20 arylalkyl
each R² or R²' is a C1-C10 alkyl group;
R⁵' is a C1-C10 alkyl group or a Z'R³' group;
R⁶ is hydrogen or a C1-C10 alkyl group, and when R⁶ is an alkyl group, it may form a 5- or 6-membered ring with the neighboring carbon atom (the one to which R⁷ is not bound);
R⁶' is a C1-C10 alkyl group or a C6-C10 aryl group, and when R^{5'} and R^{6'} are an alkyl group, R^{5'} and R^{6'} may form a 5- or 6-membered ring together;
R⁷ is hydrogen, a C1-C6 alkyl group, a ZR³ group, a phenyl group or a phenyl group having 1 to 3 methyl substituents;
R^{7'} is hydrogen, or a C1-C10 alkyl group;
Z and Z' are independently O or S;
R³' is a C1-C10 alkyl group, or a C6-C10 aryl group optionally substituted by one or more halogen groups;
R³ is a C1-C10 alkyl group;
each n is independently 0 to 4, e.g. 0, 1 or 2;
and each R¹ is independently a C1-C20 hydrocarbyl group, e.g. a C1-C10 alkyl group.

Particularly preferred compounds include (Me=methyl; Bu=butyl; Ph=phenyl; Ind=inden(1-yl):
*rac*-dimethylsilanediylbis[2-methyl-4-(4-*tert*-butylphenyl)-1,5,6,7-tetrahydro-s-indacen-1-yl] zirconium dichloride, *rac*-dimethylsilanediylbis(2-methyl-4-phenyl-5-methoxy-6-*tert*-butylinden-1-yl) zirconium dichloride, *rac*-anti-Me₂Si(2-Me-4-Ph-6-*t*Bu-Ind)(2-Me-4-Ph-5-OMe-6-*t*Bu-Ind)ZrCl₂, *rac*-anti-Me₂Si(2-Me-4-(p-*t*BuPh)-Ind)(2-Me-4-Ph-5-OMe-6-*t*Bu-Ind)ZrCl₂, *rac*-anti-Me₂Si(2-Me-4-(3,5-di-*t*BuPh)-6-*t*Bu-Ind)(2-Me-4-Ph-5-OMe-6-*t*Bu-Ind)ZrCl₂, *rac*-anti-Me₂Si(2-Me-4-(p-*t*BuPh)-Ind)(2-Me-4-Ph-5-OC₆F₅)-6-*i*Pr-Ind)ZrCl₂, *rac*-anti-Me(CyHex)Si(2-Me-4-Ph-6-*t*Bu-Ind)(2-Me-4-Ph-5-OMe-6-*t*Bu-Ind)ZrCl₂, *rac*-anti-Me₂Si(2-Me-4-(3,5-di-*t*BuPh)-7-Me-Ind)(2-Me-4-Ph-5-OMe-6-*t*Bu-Ind)ZrCl₂, *rac*-anti-Me₂Si(2-Me-4-(3,5-di-*t*BuPh)-7-OMe-Ind)(2-Me-4-Ph-5-OMe-6-*t*Bu-Ind)ZrCl₂, *rac*-anti-Me₂Si(2-Me-4-(p-*t*BuPh)-6-*t*Bu-Ind)(2-Me-4-Ph-5-OMe-6-*t*Bu-Ind)ZrCl₂, *rac*-anti-Me₂Si(2-Me-4-(p-*t*BuPh)-Ind)(2-Me-4-(4-*t*BuPh)-5-OMe-6-*t*Bu-Ind)ZrCl₂, *rac*-anti-Me₂Si(2-Me-4-(p-*t*BuPh)-Ind)(2-Me-4-(3,5-*t*Bu2Ph)-5-OMe-6-*t*Bu-Ind)ZrCl₂, *rac-*anti-Me₂Si(2-Me-4-(p-*t*BuPh)-Ind)(2-Me-4-Ph-5-O*t*Bu-6-*t*Bu-Ind)ZrCl₂, rac-dimethylsilanediylbis[2-methyl-4-(3',5'-dimethylphenyl)-5-methoxy-6-tert-butylinden-1-yl] zirconium dichloride, rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride, rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride, rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride, rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride, rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride, rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Preferred metallocene complexes (procatalysts) are rac-anti-dimethylsilandiyl(2-methyl-4-phenyl-5-methoxy-6-tert-butyl-indenyl)(2-methyl-4-(4-tert-butylphenyl)indenyl)zirconium dichloride and rac-anti-dimethylsilanediyl[2-methyl-4,8-bis-(3',5'- dimethylphenyl)-1,5,6,7-tetrahydro-s-indacen-1-yl] [2-methyl-4-(3',5'-dimethylphenyl)-5- methoxy-6-tert-butylinden-1-yl] zirconium dichloride, the latter being particularly preferred.

In an embodiment, a preferred metallocene complex (procatalyst) is a metallocene catalyst as disclosed in WO 2019/179959, which is incorporated by reference herewith. A specifically preferred metallocene catalyst complex is rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1 -yl] zirconium dichloride (MC-2).

To form an active catalytic species it is necessary to employ a co-catalyst as is well known in the art. Accordingly, besides the metallocene complex (procatalyst), the metallocene catalyst (also referred to as catalyst system) comprises additionally a co-catalyst, preferably a co-catalyst as defined in WO 2015/011135 A1 or as defined in WO 2019/179959 A1, both of which are incorporated by reference. A particularly preferred co-catalyst is methylaluminoxane (MAO) and/or a borate, preferably trityl tetrakis(pentafluorophenyl)borate. A co-catalyst system comprising a boron containing co-catalyst and an aluminoxane co-catalyst in combination is preferably used.

A preferred aluminoxane co-catalyst is the following formula: 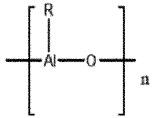 where n is from 6 to 20 and R is a monovalent group being preferably selected from the group consisting of C1-C10-alkyl, preferably C1-C5-alkyl, or C3-C10-cycloalkyl, C7-C12-arylalkyl or -alkylaryl and/or phenyl or naphthyl. Aluminoxanes are formed on partial hydrolysis of organoaluminum compounds, for example those of the formula AlR₃, AlR₂^{y} and Al₂R₃Y₃ where R can be, for example, C1-C10-alkyl, preferably C1-C5-alkyl, or C3-C10-cycloalkyl, C7-C12-arylalkyl or -alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but mixtures of oligomers of the above formula.

A preferred aluminoxane is methylaluminoxane (MAO). Since the aluminoxanes usable as co-catalysts are not, owing to their mode of preparation, pure compounds, the molarity of aluminoxane solutions is usually based on their aluminium content.

Also a boron containing co-catalyst is preferably used in combination with the aluminoxane co-catalyst. Preferred borates of use in the invention comprise the trityl, i.e. triphenylcarbenium, ion. Thus the use of Ph3CB(PhF5)4 and analogues therefore are especially favored.

The catalyst system of the invention is preferably used in supported form, i.e. the metallocene catalyst is a supported catalyst. The (particulate) support material used is preferably silica or a mixed oxide such as silicaalumina, in particular silica. The use of a silica support is preferred. The skilled man is aware of the procedures required to support a metallocene catalyst. In a preferred embodiment, the catalyst system corresponds to the ICS3 of WO 2020/239602 A1.

### Additives

The polypropylene composition preferably comprises up to 5.00 wt.-%, more preferably 0.01 to 5.00 wt.-%, like 0.01 to 3.00 wt.-% or 0.01 to 2.00 wt.-%, additive(s) based on the polypropylene composition. The additives are preferably selected from the group consisting of antioxidants, UV-stabilizers, antistatic agents, acid scavengers, and slip agents. Preferably, at least antioxidant(s) are present as additive(s).

In the context of the present invention, a polymer component of a master batch used for adding an additive and/or nucleating agent(s) is considered an "additive", even though the polymer component of a master batch (also referred to as matrix) is preferably a polypropylene homopolymer as well.

### Molded product and use of composition

A molded product of the present invention comprises 60 to 100 wt.-% of the polypropylene composition of the invention. The molded product preferably comprises 65 to 99 wt.-%, more preferably 70 to 98 wt.-%, like 75 to 97 wt.-%, or 80 to 95 wt.-% of the polypropylene composition.

The invention furthermore relates to a use of the polypropylene composition of the present invention for preparing a molded product, like a packaging article, an automotive exterior part, an automotive interior part, or a housing for appliance or electronics, and/or for preparing an injection molded article having an average wall thickness of 2 mm or less.

The injection molded article is preferably a thin-wall packaging article, like a cup, a tray, a pail or a lid. The injection molded article preferably has a wall thickness in the range of from 0.1 to 2.0 mm, like in the range of from 0.2 to 2.0 mm.

In general and in particular, the present invention relates to one or more of the following items:
**1.** A polypropylene composition comprising a single site catalyzed polypropylene homopolymer (SScPPH) having a melt flow rate MFR2 in the range of from 1 to 500 g/10 min (according ISO 1133 at 230 °C and 2.16 kg load), a melting temperature Tm in the range of from 149 to 160 °C (DSC according to ISO 11357) and an amount of 2,1-erythro regio-defects in the range of from 0.10 to 1.20 mol-% (determined by ¹³C NMR spectroscopy), 0.01 to 1.00 wt.-% of a first dispersive particulate α-nucleating agent, 0.01 to 2.00 wt.-% of a second dispersive particulate α-nucleating agent, and 0 to 500 ppm by weight of a third α-nucleating agent being a polymeric nucleating agent.
**2.** The polypropylene composition according to item 1, comprising 0.02 to 0.80 wt.-%, preferably 0.03 to 0.60 wt.-%, of the first dispersive particulate α-nucleating agent.
**3.** The polypropylene composition according to item 1 or 2, comprising 0.02 to 1.80 wt.-% of the second dispersive particulate α-nucleating agent.
**4.** The polypropylene composition according to any one of items 1 to 3, comprising 0 to 300 ppm, preferably 0 to 150 ppm, of the third α-nucleating agent.
**5.** The polypropylene composition according to any one of items 1 to 4, wherein the composition contains 90.00 wt.-% or more of the SScPPH, preferably 91.00 wt.-% or more, like 92.00 wt.-% or more, 93.00 wt.-% or more, 94.00 wt.-% or more, 95.00 wt.-% or more, 95.50 wt.-% or more, or 96.00 wt.-% or more, and/or
   wherein the composition contains the SScPPH in an amount in the range of from 90.00 to 99.98 wt.-%, preferably in the range of from 92.00 to 99.90 wt.-%, like in the range of from 93.00 to 99.50 wt.-%, in the range of from 94.00 to 99.00 wt.-%, in the range of from 95.00 to 98.50 wt.-%, or in the range of from 96.00 to 98.00 wt.-%.
**6.** The polypropylene composition according to any one of items 1 to 5, wherein the first dispersive particulate α-nucleating agent or the components of the mixture forming the first dispersive particulate α-nucleating agent are selected from low molecular weight organic type nucleating agent(s).
**7.** The polypropylene composition according to any one of items 1 to 6, wherein the first dispersive particulate α-nucleating agent or the components of the mixture forming the first dispersive particulate α-nucleating agent are selected from the group consisting of
   (iv) salts of monocarboxylic acids, like sodium benzoate or aluminum bis(4-tert-butylbenzoate) hydroxide,
   (v) salts of di- or polycarboxylic acids, like the disodium salt of bicyclo (2.2.1) heptane-2,3-dicarboxylic acid or the calcium salt of 1,2-cyclohexane dicarboxylicacid, and
   (vi) salts of diesters of phosphoric acid, like sodium 2,2'-methylenebis (4,6,-di-tert-butylphenyl) phosphate or aluminium-hydroxy-bis[2,2'-methylene-bis(4,6-di-t-butylphenyl)phosphate];
   in particular at least one of sodium benzoate, sodium-2,2'-methylenebis-(4,6-di-tert-butyl-phenyl)-phosphate, hydroxybis-(2,4,8,10-tetra-tert-butyl-6-hydroxy-12h-dibenzo-(d,g)(1,3,2)-dioxaphosphocin-oxidato)-aluminium.
**8.** The polypropylene composition according to any one of items 1 to 7, wherein the first dispersive particulate α-nucleating agent or the components of the mixture forming the first dispersive particulate α-nucleating agent are selected from the group consisting of aromatic carboxylic acid salts, preferably salts of substituted or unsubstituted benzoic acid, more preferably salts of benzoic acid having an alkyl substituent in para position.
**9.** The polypropylene composition according to any one of items 1 to 8, wherein the composition has a melt flow rate MFR2 in the range of from 1 to 500 g/10 min, preferably in the range of from 10 to 500 g/10 min, more preferably in the range of from 50 to 450 g/10 min, like in the range of from 70 to 300 g/10 min.
**10.** The polypropylene composition according to any one of items 1 to 9, wherein the composition has a crystallization temperature Tc (determined based on differential scanning calorimetry, DSC, according to ISO 11357) in the range of from 120 to 135 °C, preferably in the range of from 123 to 133 °C.
**11.** The polypropylene composition according to any one of items 1 to 10, wherein the composition has a Flexural modulus (according to ISO 178) in the range of 1800 to 2500 MPa, preferably in the range of from 1820 to 2300 MPa, more preferably in the range of from 1830 to 2200 MPa.
**12.** The polypropylene composition according to any one of items 1 to 11, wherein the composition has a heat distortion temperature (HDT; according to ISO 75 B, low load, measured on 80x10x4 mm³ specimens) in the range of from 105 to 130 °C, preferably in the range of from 108 to 128 °C, like in the range of from 109 to 126 °C.
**13.** The polypropylene composition according to any one of items 1 to 12, wherein the second dispersive particulate α-nucleating agent or the components of the mixture forming the second dispersive particulate α-nucleating agent are selected from inorganic type nucleating agents (mineral nucleating agents), preferably at least one selected from the group consisting of carbonates, silicates, aluminates or alumosilicates.
**14.** The polypropylene composition according to any one of items 1 to 13, wherein the second dispersive particulate α-nucleating agent or the components of the mixture forming the second dispersive particulate α-nucleating agent are selected from the group consisting of inorganic compounds, including calcium carbonate, talc, wollastonite, mica and kaolin, preferably at least talc.
**15.** The polypropylene composition according to any one of items 1 to 14, wherein the third dispersive particulate α-nucleating agent is selected from the group consisting of poly(vinyl cyclohexane) and poly(vinyl cyclopentane).
**16.** The polypropylene composition according to any one of items 1 to 15, further comprising up to 5.00 wt.-%, preferably 0.01 to 5.00 wt.-%, like 0.01 to 2.00 wt.-%, additive(s) based on the polypropylene composition, said additives being preferably selected from the group consisting of antioxidants, UV-stabilizers, antistatic agents, acid scavengers, and slip agents.
**17.** The polypropylene composition according to any one of items 1 to 16, comprising at least antioxidant(s) as additive(s).
**18.** The polypropylene composition according to any one of items 1 to 17, wherein the SScPPH is a bimodal SScPPH and/or a multimodal SScPPH.
**19.** The polypropylene composition according to any one of items 1 to 18, wherein the bimodal/multimodal SScPPH comprises or consists of a first PPH component (PPH-C1) and a second PPH component (PPH-C2).
**20.** The polypropylene composition according to item 18 or 19, wherein the bimodal SScPPH is made in a two-stage polymerization process applying a slurry - gas phase reactor (GPR) cascade, such that the PPH-C1 is made in the slurry reactor and the PPH-C2 is made in the GPR.
**21.** The polypropylene composition according to any one of items 18 to 20, wherein the multimodal SScPPH is made in a multi-stage polymerization process applying a cascade of at least two slurry reactors and at least one gas phase reactor (GPR) or a cascade of at least one slurry reactor and at least two gas phase reactors.
**22.** The polypropylene composition according to any one of items 1 to 21, wherein the SScPPH is prepared in the presence of a (preferably supported, more preferably silica-supported) catalyst system comprising a transition metal compound of the following formula (I):

   Rₙ(Cp)₂MX₂ (I)

   wherein
   each Cp independently is an unsubstituted or substituted and/or fused cyclopentadienyl ligand, like a substituted or unsubstituted cyclopentadienyl, a substituted or unsubstituted indenyl, a substituted or unsubstituted indacenyl (such as substituted or unsubstituted 1,3,4,5-tetrahydro-s-indacen(1)yl) or a substituted or unsubstituted fluorenyl ligand; the one or more substituent(s), if present, being independently selected preferably from halogen, hydrocarbyl, C3-C12- cycloalkyl which contains 1, 2, 3 or 4 heteroatom(s) in the ring moiety, C6-C20- heteroaryl, C1-C20-haloalkyl, -SiR"₃, -OSiR"₃, -SR", -PR"₂, -OR" or -NR"₂,
   each R" is independently a hydrogen or hydrocarbyl, like C1-C20-alkyl, C2- C20-alkenyl, C2-C20-alkynyl, C3 -C12-cycloalkyl or C6-C20-aryl; and in case of -NR"₂, the two substituents R" can form a ring, like a five- or six-membered ring, together with the nitrogen atom to which they are attached;
   R is a bridge of 1-3 atoms, like a bridge of 1-2 C-atoms and 0-2 heteroatoms, wherein the heteroatom(s) are preferably selected from the group consisting of Si, Ge and/or O atom(s), wherein each of the bridge atoms may bear independently substituents, like C1-C20-alkyl, tri(C1-C20-alkyl)silyl, tri(C1-C20-alkyl)siloxy or C6-C20-aryl substituents); or a bridge of 1-3, preferably one or two, hetero atoms, preferbaly silicon, germanium and/or oxygen atom(s), like -SiR¹⁰₂, wherein each R¹⁰ is independently C1-C20-alkyl, C3-12 cycloalkyl, C6-C20-aryl or tri(C1-C20-alkyl)silyl-residue, such as trimethylsilyl;
   M is a transition metal of Group 4, preferably Zr or Hf, especially Zr;
   each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"3, -SiR"3, -OSiR"3, -NR"₂ or -CH₂-Y, wherein Y is C6-C20-aryl, C6-C20-heteroaryl, C1-C20-alkoxy, C6-C20-aryloxy, NR"₂,-SR", -PR"3, -SiR"3, or -OSiR"3;
   each of the above mentioned ring moieties alone or as a part of another moiety as the substituent for Cp, X, R" or R can further be substituted, preferably with a C1-C20-alkyl which may contain Si and/or O atoms; and
   n is 1 or 2.
**23.** The polypropylene composition according to any one of items 1 to 22, wherein the SScPPH is prepared in the presence of a (preferably supported, more preferably silica-supported) catalyst system comprising a transition metal compound of the following formula (IV') or (IV) 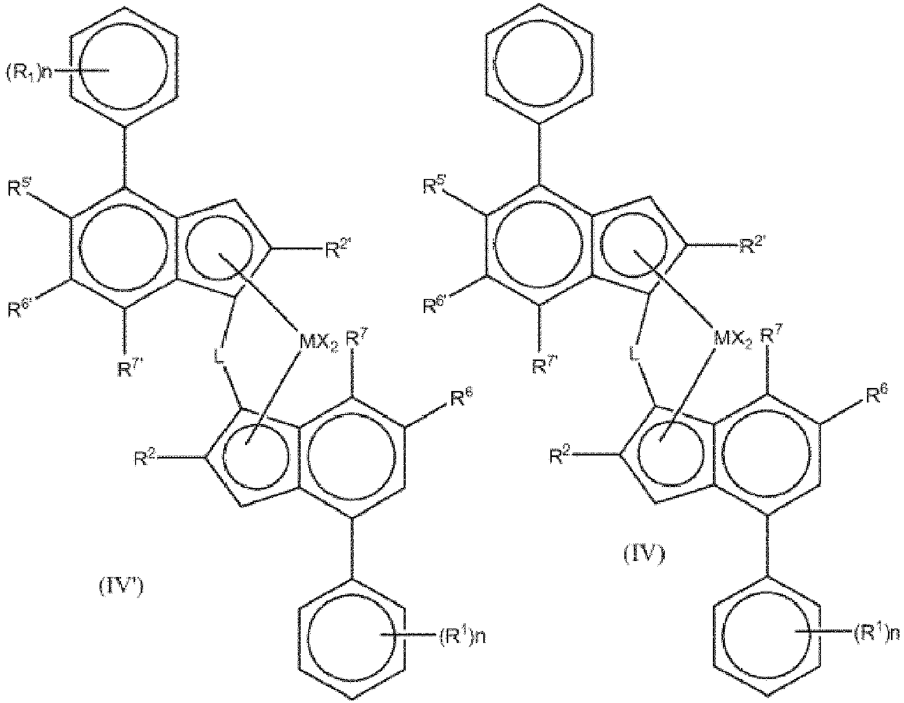 wherein
   M is Zr;
   each X is a sigma ligand, preferably each X is independently a hydrogen atom, a halogen atom, a C1-C6 alkoxy group, C1-C6 alkyl, phenyl or a benzyl group;
   L is a divalent bridge selected from -R'₂C-, -R'₂C-CR'₂, -R'₂Si-, -R'₂Si-SiR'₂-, -R'₂Ge-, wherein each R' is independently a hydrogen atom, C1-C20 alkyl, C3-C10 cycloalkyl, tri(C1-C20-alkyl)silyl, C6-C20-aryl, C7-C20 arylalkyl
   each R² or R²' is a C1-C10 alkyl group;
   R⁵' is a C1-C10 alkyl group or a Z'R³' group;
   R⁶ is hydrogen or a C1-C10 alkyl group, and when R⁶ is an alkyl group, it may form a 5- or 6-membered ring with the neighboring carbon atom (the one to which R⁷ is not bound);
   R^{6'} is a C1-C10 alkyl group or a C6-C10 aryl group, and when R^{5'} and R^{6'} are an alkyl group, R^{5'} and R^{6'} may form a 5- or 6-membered ring together;
   R⁷ is hydrogen, a C1-C6 alkyl group, a ZR³ group, a phenyl group or a phenyl group having 1 to 3 methyl substituents;
   R^{7'} is hydrogen, or a C1-C10 alkyl group;
   Z and Z' are independently O or S;
   R³' is a C1-C10 alkyl group, or a C6-C10 aryl group optionally substituted by one or more halogen groups;
   R³ is a C1-C10 alkyl group;
   each n is independently 0 to 4, e.g. 0, 1 or 2;
   and each R¹ is independently a C1-C20 hydrocarbyl group, e.g. a C1-C10 alkyl group.
**24.** The polypropylene composition according to any one of items 1 to 23, wherein the SScPPH has a melt flow rate MFR2 in the range of from 10 to 500 g/10 min, preferably in the range of from 50 to 450 g/10 min, like in the range of from 70 to 300 g/10 min.
**25.** The polypropylene composition according to any one of items 1 to 24, wherein the SScPPH has a melting temperature Tm in the range of from 150 to 158 °C, more preferably in the range of from 151 to 157 °C.
**26.** The polypropylene composition according to any one of items 1 to 25, wherein the SScPPH has an amount of 2,1-erythro regio-defects in the range of from 0.15 to 1.10 mol-%, preferably in the range of from 0.20 to 1.00 mol-%, like in the range of from 0.25 to 0.90 mol-%.
**27.** The polypropylene composition according to any one of items 1 to 26, wherein the SScPPH has a xylene cold soluble content (XCS at 25 °C according to ISO 16152) in the range of from 0.10 wt.-% to 1.50 wt.-%, preferably in the range of from 0.15 to 1.20 wt.-%, more preferably in the range of from 0.20 to 1.10 wt.-%, like in the range of from 0.25 to 1.00 wt.-%.
**28.** Molded product comprising 60 to 100 wt.-% of the polypropylene composition according to any one of items 1 to 27.
**29.** Molded product according to item 28, comprising 65 to 99 wt.-%, preferably 70 to 98 wt.-%, like 75 to 97 wt.-%, or 80 to 95 wt.-% of the polypropylene composition.
**30.** Use of a polypropylene composition according to any one of items 1 to 27 for preparing a molded product, like a packaging article, an automotive exterior part, an automotive interior part, or a housing for appliance or electronics.
**31.** Use of a polypropylene composition according to any one of items 1 to 27 for preparing an injection molded article having an average wall thickness of 2 mm or less.
**32.** Use according to item 31, wherein the injection molded article is a thin-wall packaging article, like a cup, a tray, a pail or a lid.
**33.** Use according to item 31 or 32, wherein the injection molded article has a wall thickness in the range of from 0.1 to 2.0 mm, like in the range of from 0.2 to 2.0 mm.

### Measurement methods

Methods for measuring properties of the composition, copolymer and product of the present invention and as used in the Examples of the present invention are described below. Unless specifically stated to the contrary, if a determination method (measurement method) is described in the context of (only) one product or material or without reference to a specific product/material, it is to be understood that the same method can be used for measurement the same property of another product/material. This similarly applies to all measurement methods disclosed herein.

MFR (MFR2) was measured according to ISO 1133 at 230 °C under 2.16 kg load.

Flexural Modulus was determined in 3-point-bending according to ISO 178 on injection molded specimens of 80 x 10 x 4 mm³ (80mm x 10mm x 4mm), injection molded according to EN ISO 1873-2 using a melt temperature of 200 °C.

Heat distortion temperature (HDT) was determined according to ISO 75 B (low load) measured on 80 x 10 x 4 mm³ specimens injection molded according to EN ISO 1873-2.

Median particle size (D50) is measured according to ISO 13317-3 (Sedigraph method).

Xylene Cold Soluble (XCS) content was determined according to standard gravimetric method according to ISO 16152 at 25 °C.

### - DSC analysis

Melting temperature (Tm), melting enthalpy (Hm) and crystallization temperature (Tc) were measured by DSC analysis according to ISO 11357. Specifically, DSC was measured with a TA Instrument Q2000 differential scanning calorimeter (DSC) on 5 to 7 mg samples. DSC was run according to ISO 11357 / part 3 / method C2 in a heat / cool / heat cycle with a scan rate of 10 °C/min in the temperature range of -30 °C to +225 °C. Crystallization temperature (Tc) was determined from the cooling step, while melting temperature (Tm) and melting enthalpy (Hm) were determined from the second heating step.

### - Quantification of microstructure by NMR spectroscopy - regio-defects

Quantitative nuclear-magnetic resonance (NMR) spectroscopy was used to quantify the content of regio-defects in the PP homopolymer. Quantitative ¹³C {¹H} NMR spectra (¹³C measurement with ¹H decoupling) were recorded in the solution-state using a Bruker Advance III 400 NMR spectrometer operating at 400.15 and 100.62 MHz for ¹H and ¹³C respectively. All spectra were recorded using a ¹³C optimized 10 mm extended temperature probehead at 125 °C using nitrogen gas for all pneumatics. Approximately 200 mg of material was dissolved in 3 ml of fully deuterated 1,2-tetrachloroethane (TCE-d2) along with chromium-(III)- acetyl acetonate (Cr(acac)₂; relaxation agent) to result in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. Standard single-pulse excitation was employed without NOE, using an optimized tip angle, 1 s relaxation delay and a bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative 13C {1H} NMR spectra were processed, integrated and relevant quantitative properties determined from the integrals.

Characteristic signals corresponding to 2,1 erythro regio-defects were observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) and the molar ratio (content) of regio-defects was determined from integration of respective signals. Characteristic signals corresponding to other types of regio-defects were not observed.

### Examples

The following examples are included to demonstrate certain aspects and embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

### SSc polypropylene homopolymer preparation

The homopolymer of inventive examples and comparative examples were prepared in a Borstar PP pilot unit with sequential process comprising a pre-polymerization reactor, a loop reactor and a gas phase reactor. The metallocene catalyst system ICS3 of WO2020/239602 A1, which is incorporated herewith by reference, was used as a single site catalyst and added in the pre-polymerization step. The reaction conditions are summarized in Table 1.

Properties of the resulting SScPP homopolymer and of intermediate polymers are also set forth in Table 1.

**Table 1:**

| | | **SScPPH-1** |
|---|---|---|
| **Pre-pol.** | | |
| Pressure | kPa | 5418 |
| Residence time | h | 0.3 |

| **Loop** | | |
|---|---|---|
| Temperature | °C | 65 |
| Pressure | kPa | 5420 |
| Split | wt% | 61 |
| Feed H2/C3 ratio | mol/kmol | 0.38 |
| MFR | g/10min | 99 |

| **GPR** | | |
|---|---|---|
| Temperature | °C | 80 |
| Pressure | kPa | 2500 |
| Split | wt% | 39 |
| Feed H2/C3 ratio | mol/kmol | 3.8 |
| | | |

| **SScPPH** | | |
|---|---|---|
| Tm | °C | 152 |
| Tc | °C | 121 |
| XCS | wt% | 0.80 |
| MFR | g/10min | 150 |
| 2,1 reqio-defects | mol-% | 0.60 |

In the above Table, the *"Split"* is the polymer portion (wt.-%) of the final polymer originating from the respective reactor stage, XCS is xylene cold soluble content and MFR is the melt flow rate.

### Examples 1 to 3

For the production of the polymer compositions of examples 1, 2 and 3, SScPPH-1 shown above in Table 1 was compounded with antioxidant Irganox^{®} B215 FF (a 2:1 blend of antioxidants Irgafos^{®} 168 (tris(2,4-ditert- butylphenyl)phosphite, CAS No: 31570-04-4) and Irganox^{®} 1010 (pentaerythritol tetrakis[3-[3,5-di-tert-butyl-4-hydroxyphenyl]propionate], CAS No: 6683-19-8), commercially available from BASF SE), and synthetic hydrotalcite as an acid scavenger (AS).

Nucleating agents were added as shown in Table 2. In the case of inventive Example 3 and Comparative Example 2, the second and third nucleating agent were added (together) in the form of a masterbatch (2 wt.-%) comprising 1 wt.-% talc (final content in composition: 0.02 wt.-%) and 20 wt.-ppm poly(vinyl cyclohexane) (final content in composition: 0.4 wt.-ppm) in a polypropylene homopolymer matrix.

### Comparative Examples 1 and 2

Compositions according to Comparative Examples 1 and 2 are prepared in the same manner as for inventive Examples using the components and compounding contents shown in Table 2 below.

**Table 2:**

| | | | **Ex. 1** | **Ex. 2** | **Ex. 3** | **CEx. 1** | **CEx. 2** |
|---|---|---|---|---|---|---|---|
| SScPPH-1 | | wt.-% | 99.00 | 99.05 | 97.75 | 99.10 | 97.80 |
| Antioxidant | Irganox^{®} | wt.-% | 0.15 | 0.15 | 0.15 | 0.15 | 0.15 |
| AS (acid scav.) | | wt.-% | 0.05 | 0.05 | 0.05 | 0.05 | 0.05 |
| Talc (NUC2) | (D50: 6.0 µm) | wt.-% | 0.70 | 0.70 | (0.02) | 0.70 | (0.02) |
| NUC1-1 | *1 | wt.-% | 0.10 | - | - | - | - |
| NUC1-2 | *2 | wt.-% | - | 0.05 | 0.05 | - | - |
| MB | *3 | wt.-% | - | - | 2.00 | - | 2.00 |
| MFR | 230 °C/2.16kg | g/10min | 156 | 150 | 146 | 152 | 154 |
| Tc | DSC | °C | 125 | 127 | 127 | 121 | 122 |
| Tm | DSC | °C | 155 | 156 | 157 | 155 | 155 |
| Hm | DSC | J/g | 106 | 110 | 111 | 109 | 110 |
| HDT | ISO75B | °C | 109.5 | 111.6 | 112.0 | 102.0 | 107.0 |
| Flex.modulus | ISO178 | MPa | 1877 | 1869 | 1839 | 1756 | 1737 |

| | | | | | | | |
|---|---|---|---|---|---|---|---|
| *1: NUC1-1 is a first nucleating agent (sodium salt of benzoic acid) *2: NUC1-1 is a first nucleating agent (aluminum monohydroxide salt of para-tert-butyl benzoic acid) *3: MB is a mixture of a second and third nucleating agent in a matrix polymer (masterbatch as described above) MFR: melt flow rate; Tc: crystallization temperature; Tm: melt temperature; Hm: melting enthalpy; HDT: heat distortion temperature | | | | | | | |

## Claims

1. A polypropylene composition comprising a single site catalyzed polypropylene homopolymer (SScPPH) having a melt flow rate MFR2 in the range of from 1 to 500 g/10 min (according ISO 1133 at 230 °C and 2.16 kg load), a melting temperature Tm in the range of from 149 to 160 °C (DSC according to ISO 11357) and an amount of 2,1-erythro regio-defects in the range of from 0.10 to 1.20 mol-% (determined by ¹³C NMR spectroscopy), 0.01 to 1.00 wt.-%, preferably 0.02 to 0.80 wt.-%, more preferably 0.03 to 0.60 wt.-%, of a first dispersive particulate α-nucleating agent, 0.01 to 2.00 wt.-%, preferably 0.02 to 1.80 wt.-%, of a second dispersive particulate α-nucleating agent, and 0 to 500 ppm by weight, preferably 0 to 300 ppm, like 0 to 150 ppm, of a third dispersive particulate α-nucleating agent being a polymeric nucleating agent.

2. The polypropylene composition according to claim 1, wherein the composition contains 90.00 wt.-% or more of the SScPPH, preferably 91.00 wt.-% or more, more preferably 92.00 wt.-% or more, like 93.00 wt.-% or more, 94.00 wt.-% or more, 95.00 wt.-% or more, 95.50 wt.-% or more, or 96.00 wt.-% or more, preferably in the range of from 90.00 to 99.98 wt.-%, more preferably in the range of from 92.00 to 99.90 wt.-%, like in the range of from 93.00 to 99.50 wt.-%, in the range of from 94.00 to 99.00 wt.-%, in the range of from 95.00 to 98.50 wt.-%, or in the range of from 96.00 to 98.00 wt.-%.

3. The polypropylene composition according to claim 1 or 2, wherein the first dispersive particulate α-nucleating agent or the components of the mixture forming the first dispersive particulate α-nucleating agent are selected from low molecular weight organic type nucleating agent(s).

4. The polypropylene composition according to any one of claims 1 to 3, wherein the first dispersive particulate α-nucleating agent or the components of the mixture forming the first dispersive particulate α-nucleating agent are selected from the group consisting of
(i) salts of monocarboxylic acids, like sodium benzoate or aluminum bis(4-tert-butylbenzoate) hydroxide,
(ii) salts of di- or polycarboxylic acids, like the disodium salt of bicyclo (2.2.1) heptane-2,3-dicarboxylic acid or the calcium salt of 1,2-cyclohexane dicarboxylicacid, and
(iii) salts of diesters of phosphoric acid, like sodium 2,2'-methylenebis (4,6,-di-tert-butylphenyl) phosphate or aluminium-hydroxy-bis[2,2'-methylene-bis(4,6-di-t-butylphenyl)phosphate];
in particular at least one of sodium benzoate, sodium-2,2'-methylenebis-(4,6-di-tert-butyl-phenyl)-phosphate, hydroxybis-(2,4,8,10-tetra-tert-butyl-6-hydroxy-12h-dibenzo-(d,g)(1,3,2)-dioxaphosphocin-oxidato)-aluminium.

5. The polypropylene composition according to any one of claims 1 to 4, wherein the first dispersive particulate α-nucleating agent or the components of the mixture forming the first dispersive particulate α-nucleating agent are selected from the group consisting of aromatic carboxylic acid salts, preferably salts of substituted or unsubstituted benzoic acid, more preferably salts of benzoic acid having an alkyl substituent in 4 position.

6. The polypropylene composition according to any one of claims 1 to 5, wherein the composition has
(a) a melt flow rate MFR2 in the range of from 1 to 500 g/10 min, preferably in the range of from 10 to 500 g/10 min, more preferably in the range of from 50 to 450 g/10 min, like in the range of from 70 to 300 g/10 min and/or
(b) a crystallization temperature Tc (determined based on differential scanning calorimetry, DSC, according to ISO 11357) in the range of from 120 to 135 °C, preferably in the range of from 123 to 133 °C, and/or
(c) a Flexural modulus (according to ISO 178) in the range of 1800 to 2500 MPa, preferably in the range of from 1820 to 2300 MPa, more preferably in the range of from 1830 to 2200 MPa, and/or
(d) a heat distortion temperature (HDT; according to ISO 75 B, low load, measured on 80x10x4 mm³ specimens) in the range of from 105 to 130 °C, more preferably in the range of from 108 to 128 °C, like in the range of from 109 to 126 °C.

7. The polypropylene composition according to any one of claims 1 to 6, wherein the second dispersive particulate α-nucleating agent or the components of the mixture forming the second dispersive particulate α-nucleating agent are selected from inorganic type nucleating agents (mineral nucleating agents), preferably at least one selected from the group consisting of carbonates, silicates, aluminates or alumosilicates.

8. The polypropylene composition according to any one of claims 1 to 7, wherein the second dispersive particulate α-nucleating agent or the components of the mixture forming the second dispersive particulate α-nucleating agent are selected from the group consisting of inorganic compounds, including calcium carbonate, talc, wollastonite, mica and kaolin, preferably talc.

9. The polypropylene composition according to any one of claims 1 to 8, wherein the third dispersive particulate α-nucleating agent is poly(vinyl cyclohexane) or poly(vinyl cyclopentane).

10. The polypropylene composition according to any one of claims 1 to 9, further comprising up to 5.00 wt.-%, preferably 0.01 to 5.00 wt.-%, like 0.01 to 2.00 wt.-%, additive(s) based on the polypropylene composition, said additives being preferably selected from the group consisting of antioxidants, UV-stabilizers, antistatic agents, acid scavengers, and slip agents.

11. The polypropylene composition according to any one of claims 1 to 10, wherein the SScPPH is a bimodal SScPPH and/or a multimodal SScPPH, wherein the bimodal/multimodal SScPPH preferably comprises or consists of a first PPH component (PPH-C1) and a second PPH component (PPH-C2); and/or the bimodal SScPPH is made in a two-stage polymerization process applying a slurry - gas phase reactor (GPR) cascade, such that the PPH-C1 is made in the slurry reactor and the PPH-C2 is made in the GPR and/or the multimodal SScPPH is made in a multi-stage polymerization process applying a cascade of at least two slurry reactors and at least one gas phase reactor (GPR) or a cascade of at least one slurry reactor and at least two gas phase reactors.

12. The polypropylene composition according to any one of claims 1 to 11, wherein the SScPPH has
(a) a melt flow rate MFR2 in the range of from 10 to 500 g/10 min, preferably in the range of from 50 to 450 g/10 min, like in the range of from 70 to 300 g/10 min, and/or
(b) a melting temperature Tm in the range of from 150 to 158 °C, preferably in the range of from 151 to 157 °C, and/or
(c) an amount of 2,1-erythro regio-defects in the range of from 0.15 to 1.10 mol-%, preferably in the range of from 0.20 to 1.00 mol-%, like in the range of from 0.25 to 0.90 mol-%, and/or
(d) a xylene cold soluble content (XCS at 25 °C according to ISO 16152) in the range of from 0.10 wt.-% to 1.50 wt.-%, preferably in the range of from 0.15 to 1.20 wt.-%, more preferably in the range of from 0.20 to 1.10 wt.-%, like in the range of from 0.25 to 1.00 wt.-%.

13. Molded product comprising 60 to 100 wt.-% of the polypropylene composition according to any one of claims 1 to 12, preferably comprising 65 to 99 wt.-%, more preferably 70 to 98 wt.-%, 75 to 97 wt.-%, like 80 to 95 wt.-% of the polypropylene composition.

14. Use of a polypropylene composition according to any one of claims 1 to 12 for preparing a molded product, like a packaging article, an automotive exterior part, an automotive interior part, or a housing for appliance or electronics.

15. Use of a polypropylene composition according to any one of claims 1 to 12 for preparing an injection molded article having an average wall thickness of 2 mm or less, preferably a thin-wall packaging article, like a cup, a tray, a pail or a lid.
